# EUROPEAN PATENT SPECIFICATION

(11) **EP 4 480 799 B1**
(45) Date of publication and mention of the grant of the patent: **17.12.2025**
(21) Application number: 24200635.1
(22) Date of filing: 05.02.2024
(51) Int. Cl.: B62K 5/10, B62J 50/22, B62K 5/08, B62K 5/027, B62K 5/05, B62K 5/06, B60K 35/22, B60K 35/28, B62D 9/02, B60W 30/04, B60W 50/14

(54) **LEANING VEHICLE**
NEIGEFAHRZEUG
VÉHICULE INCLINABLE

(30) Priority: 09.02.2023 JP 2023018377
(43) Date of publication of application: 25.12.2024
(62) Divisional of application: 24155724.8
(73) Proprietor: Yamaha Hatsudoki Kabushiki Kaisha, Iwata-shi, Shizuoka 438-8501 (JP)
(72) Inventor: NAGATA, Tatsuya, Iwata-shi, Shizuoka-ken 438-8501 (JP); UCHIYAMA, Toshifumi, Iwata-shi, Shizuoka-ken 438-8501 (JP); SASAKI, Ryo, Iwata-shi, Shizuoka-ken 438-8501 (JP); MORITA, Tomoro, Iwata-shi, Shizuoka-ken 438-8501 (JP)
(74) Representative: Grünecker Patent- und Rechtsanwälte PartG mbB

(56) References cited:
- EP-A1- 3 712 050
- EP-A1- 4 159 607
- DE-A1- 102018 132 596
- JP-A- 2019 038 495

## Description

### Field of the Invention

The present invention relates to a leaning vehicle having a left wheel and a right wheel, wherein the leaning vehicle tilts when turning left and right.

### Description of the Related Art

As disclosed in JP 2019-196 108 A, for example, a leaning vehicle has been known in the art including a vehicle body that can tilt with respect to the ground, a left wheel and a right wheel supporting the vehicle body, and a lean actuator that controls the tilting of the vehicle body. The leaning vehicle includes a link mechanism that links together the vehicle body, the left wheel and the right wheel. The vehicle body, the left wheel and the right wheel can rotate around an axis extending in the vehicle front-rear direction relative to the link mechanism. The leaning vehicle also includes a lock mechanism that locks the rotation of the vehicle body when parked, and a display section that indicates an abnormality of the lock mechanism.
A leaning vehicle having the features of the preamble of claim 1 is shown in JP 2019 038 495 A and DE 10 2018 132 596 A1, respectively. EP 4 159 607 A1 which is a document published after the priority date of the present application discloses a leaning vehicle having a lean actuator.

### SUMMARY OF THE INVENTION

### Technical Problem

According to a leaning vehicle including a lean actuator, the lean actuator can be controlled to keep the vehicle body standing by itself. Hereinafter, keeping the vehicle body standing by itself by using the lean actuator will be referred to as standing assist. By providing standing assist when the vehicle is stopped, the vehicle body can be kept from leaning even if the rider does not put their feet on the ground. In addition, by providing standing assist when starting or traveling at low speeds, the vehicle body does not lean, making driving easier. Thus, the lean actuator provides standing assist to reduce the burden on the rider when starting, when traveling at low speeds, or when the vehicle is stopped.

Now, standing assist is a control performed by the lean actuator operating accordingly, but in a conventional leaning vehicle, the rider cannot know how the lean actuator is operating. There were cases where the operation of the lean actuator did not match with the driving operation of the rider. This may have made it difficult for the rider to drive the leaning vehicle desirably.

The present invention has been made in view of the above, and an object thereof is to provide a leaning vehicle that is easy for the rider to drive desirably while the lean actuator is operating, and, thus, to increase safety during driving.

### Solution To Problem

To solve the aforementioned problem, a leaning vehicle having the features of claim 1 is provided. A leaning vehicle disclosed herein includes: a vehicle body frame including a head pipe; a left wheel arranged leftward relative to the head pipe; a right wheel arranged rightward relative to the head pipe; a left wheel support member supporting the left wheel; a right wheel support member arranged rightward of the left wheel support member and supporting the right wheel; a link member extending leftward and rightward of the vehicle body frame; a central link shaft extending in a vehicle front-rear direction that rotatably links the vehicle body frame to the link member; a left link shaft extending in the vehicle front-rear direction that rotatably links the left wheel support member to the link member; a right link shaft extending in the vehicle front-rear direction that rotatably links the right wheel support member to the link member; a lean actuator that applies a leftward or rightward torque around the central link shaft to the vehicle body frame; a display device; and a display control device that displays an image indicating a status of operation of the lean actuator on the display device.

With the leaning vehicle described above, as the image indicating the status of operation of the lean actuator is displayed on the display device, the rider can know the status of operation of the lean actuator by looking at the image. The rider can easily perform an operation in conformity with the operation of the lean actuator. Therefore, the rider can drive the leaning vehicle desirably while the lean actuator is operating.

The display control device may be configured to display information on whether the lean actuator is outputting a torque on the display device.

Thus, by looking at the display device, the rider can easily know whether the lean actuator is outputting a torque.

The display control device may be configured to display a direction of the torque output by the lean actuator on the display device.

Thus, by looking at the display device, the rider can easily know whether the lean actuator is outputting a leftward torque or a rightward torque.

The display control device may be configured to display a magnitude of the torque output by the lean actuator on the display device.

Thus, by looking at the display device, the rider can easily know the magnitude of the torque output by the lean actuator.

The display control device may be configured to display a degree of tilt of the vehicle body frame from a vertical line on the display device.

Thus, by looking at the display device, the rider can easily know the degree of tilt of the vehicle body frame.

The display control device may be configured to simultaneously display, on the display device, two or more of information on whether the lean actuator is outputting a torque, a direction of the torque output by the lean actuator, a magnitude of the torque output by the lean actuator, and a degree of tilt of the vehicle body frame from a vertical line.

Thus, by looking at the display device, the rider can simultaneously know two or more of information on whether the lean actuator is outputting a torque, the direction of the torque, the magnitude of the torque, and the degree of tilt of the vehicle body frame.

The leaning vehicle may include an abnormality detection device that detects an abnormality of the lean actuator. The display control device may be configured to, when the abnormality detection device detects an abnormality of the lean actuator, indicate on the display device that the abnormality has occurred.

Thus, when an abnormality occurs in the lean actuator, the rider can immediately know the abnormality by looking at the display device.

According to an aspect disclosed herein, but not claimed, the leaning vehicle may include: an actuator control device that executes a standing assist control of controlling the lean actuator to keep the vehicle body frame standing by itself; and a switch that switches ON/OFF the standing assist control. The display control device may be configured to display the image indicating the status of operation of the lean actuator on the display device when the switch is ON, and display another image different from said image on the display device when the switch is OFF.

Thus, as the rider operates the switch to turn ON the standing assist control, the image on the display device is switched from another image to an image that indicates the status of operation of the lean actuator. Thus, the rider can know the status of operation of the lean actuator as needed. There is no need for a dedicated display device for displaying an image indicating the status of operation of the lean actuator. It is possible to reduce the number of display devices.

The leaning vehicle includes: a speed sensor that detects a speed of the leaning vehicle; and an actuator control device that executes a standing assist control of controlling the lean actuator to keep the vehicle body frame standing by itself when the speed detected by the speed sensor is less than or equal to a threshold value. The display control device is configured to display the image indicating the status of operation of the lean actuator on the display device when the speed detected by the speed sensor is less than or equal to the threshold value, and display another image different from said image on the display device when the speed is greater than the threshold value.

Thus, when the speed of the leaning vehicle is less than or equal to the threshold value, the standing assist control is executed automatically, and the image on the display device is automatically switched to an image indicating the status of operation of the lean actuator. Thus, the rider can know the status of operation of the lean actuator as needed. There is no need for a dedicated display device for displaying an image indicating the status of operation of the lean actuator. It is possible to reduce the number of display devices.

The leaning vehicle may include: a steering shaft supported by the head pipe; and a steering handle fixed to the steering shaft. The left wheel and the right wheel are a left front wheel and a right front wheel, respectively, arranged forward relative to the steering handle.

The leaning vehicle may include: a seat supported by the vehicle body frame; and a footrest supported by the vehicle body frame, arranged downward of the seat and supporting feet of a rider seated on the seat.

Another aspect of the present disclosure is a system for a leaning vehicle, wherein the system comprises the lean actuator and the display control device.

Hence, the system can be retrofitted to the leaning vehicle having the link member and the central link shaft. In addition, the system may comprise the display device.

### Advantageous Effects of the Invention

According to the present invention, it is possible to provide a leaning vehicle that is easy for the rider to drive desirably while the lean actuator is operating.

### BRIEF DESCRIPTION OF THE DRAWINGS

FIG. 1 is a left side view of a leaning vehicle according to one embodiment.
FIG. 2 is a left side view of a part of the leaning vehicle.
FIG. 3 is a left side view of a part of the leaning vehicle.
FIG. 4 is a front view of a part of the leaning vehicle.
FIG. 5 is a plan view of a part of the leaning vehicle.
FIG. 6 is a front view of a part of the leaning vehicle with the vehicle body frame tilted leftward.
FIG. 7 is a view of the control panel and the display control device.
FIG. 8 is a diagram of an example of an actuator operation image displayed on the display device.
FIG. 9 is a diagram showing another example of an actuator operation image displayed on the display device.
FIG. 10 is a block diagram according to an example of the control system for the leaning vehicle.
FIG. 11 is a block diagram according to another example of the control system for the leaning vehicle.

### DETAILED DESCRIPTION OF THE PREFERRED EMBODIMENTS

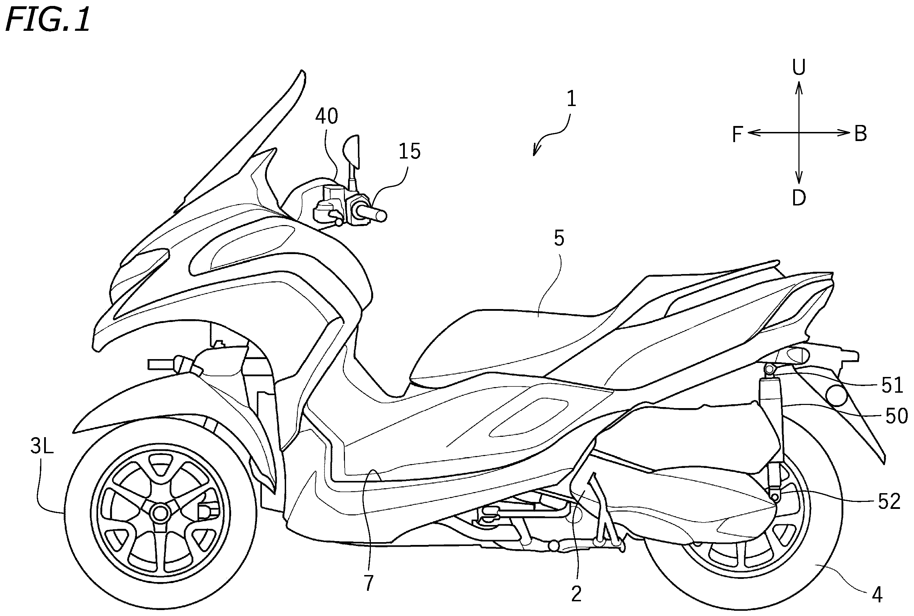

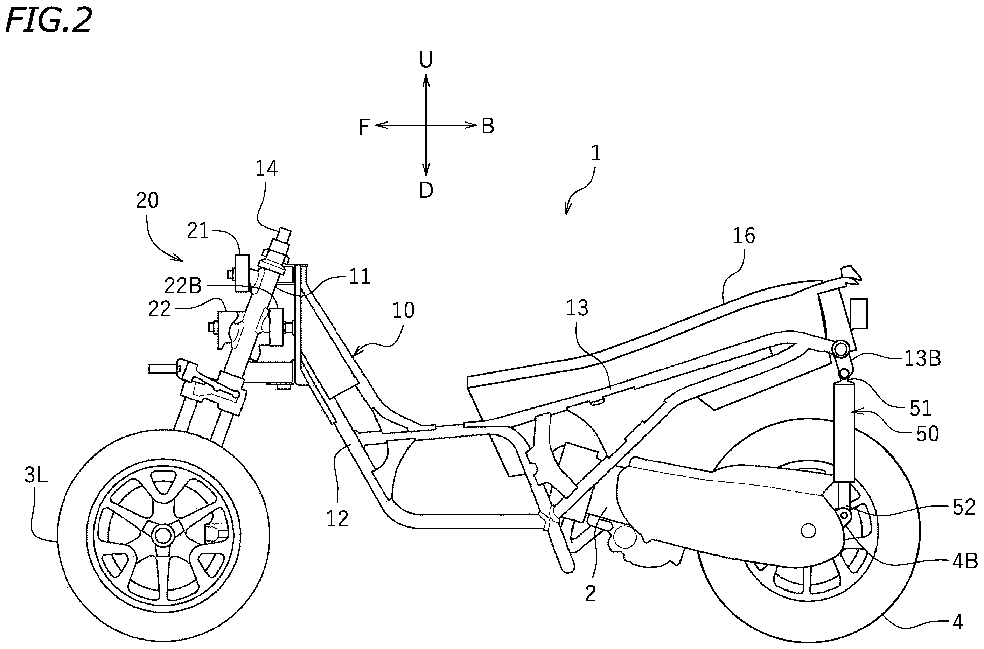

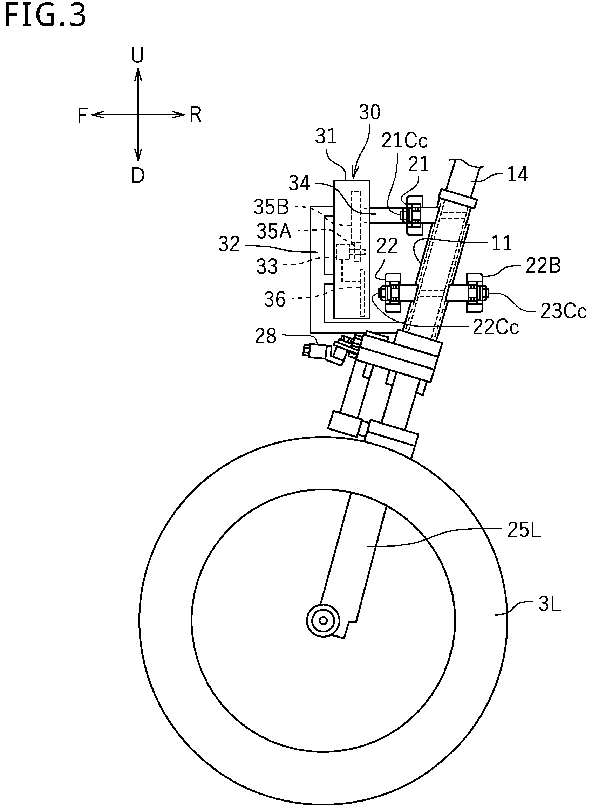

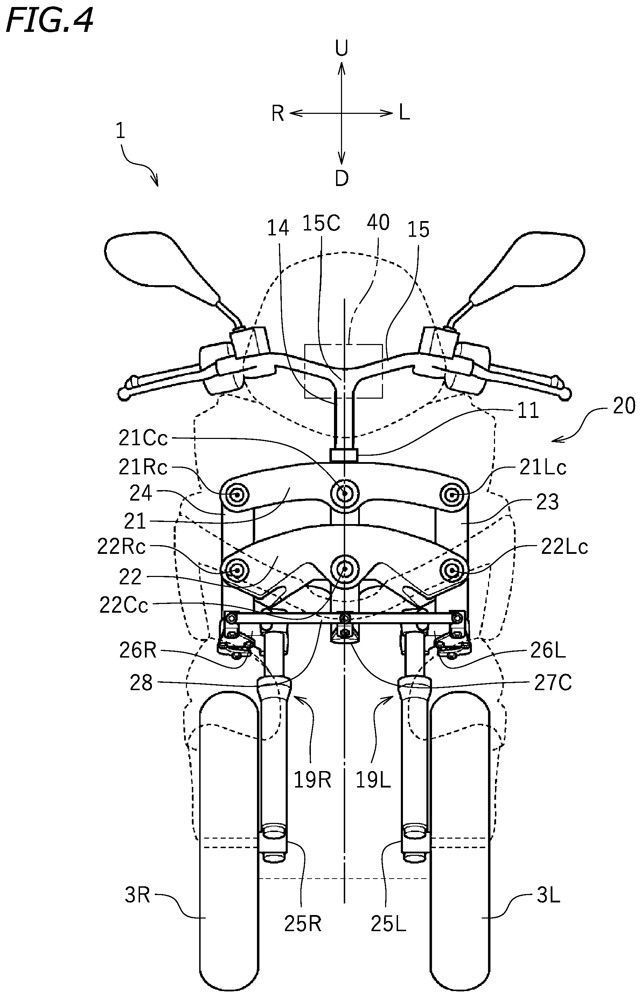

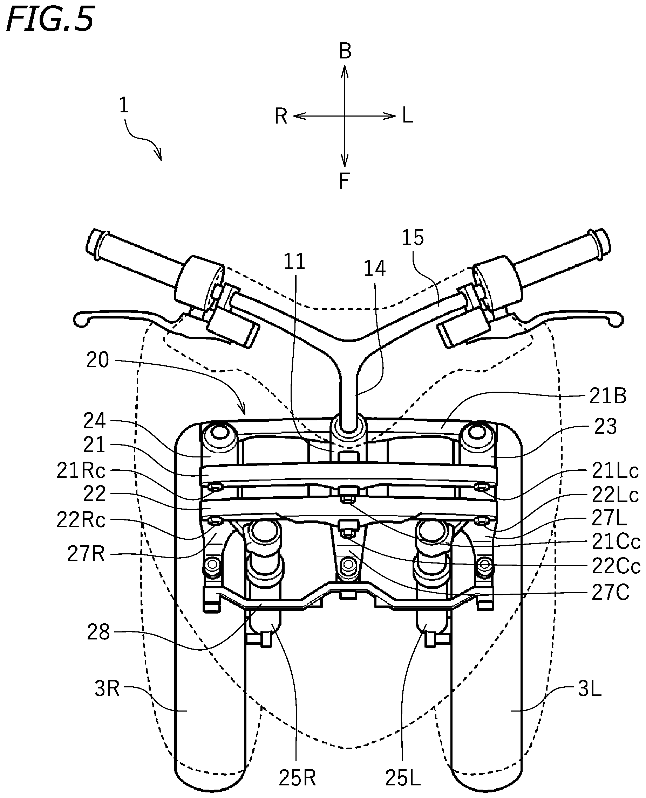

One embodiment of a leaning vehicle will now be described with reference to the drawings. FIG. 1 is a left side view of a leaning vehicle 1 according to the present embodiment. FIG. 2 is a left side view of a part of the leaning vehicle 1. FIG. 3 is a left side view of a part of the leaning vehicle 1. FIG. 4 is a front view of a part of the leaning vehicle 1. FIG. 5 is a plan view of a part of the leaning vehicle 1.

The terms front, rear, left, right, up and down, as used in the description below, refer to these directions as seen from a virtual rider seated on a seat 5 while the leaning vehicle 1 is standing upright (standing upright as used herein refers to a state where a vehicle body frame 10 to be described below is standing upright) on a horizontal surface with no rider and no load thereon, unless specified otherwise. The designations F, B, L, R, U and D, as used in the figures, refer to front, rear, left, right, up and down, respectively. The vehicle up-down direction coincides with the vertical direction. The vehicle front-rear direction is orthogonal to the vehicle up-down direction. The vehicle left-right direction is orthogonal to the vehicle front-rear direction and the vehicle up-down direction.

As shown in FIG. 1 and FIG. 2, the leaning vehicle 1 includes the vehicle body frame 10, a link mechanism 20, a left front wheel 3L, a right front wheel 3R (see FIG. 4), a rear wheel 4, a power unit 2, the seat 5 and a storage box 16. The leaning vehicle 1 is a three-wheel vehicle with two front wheels 3L, 3R and one rear wheel 4.

As shown in FIG. 2, the vehicle body frame 10 includes a head pipe 11, a down frame 12 extending rearward and downward from the head pipe 11, and a seat frame 13 extending rearward from the down frame 12. The seat 5 is supported by the vehicle body frame 10. Herein, the seat 5 is supported by the seat frame 13. The storage box 16 is arranged downward of the seat 5. The storage box 16 is supported by the seat frame 13. As shown in FIG. 4, a steering shaft 14 is rotatably supported by the head pipe 11. A steering handle 15 is fixed to the steering shaft 14.

As shown in FIG. 1, the leaning vehicle 1 according to the present embodiment is a scooter. The leaning vehicle 1 includes a low footrest 7. The footrest 7 is supported by the vehicle body frame 10. Herein, the footrest 7 is supported by the down frame 12 (see FIG. 2). The footrest 7 is arranged downward of the seat 5. The footrest 7 is a platform for supporting the feet of the rider seated on the seat 5.

As shown in FIG. 4, the link mechanism 20 is a parallelogram link-type link mechanism. The link mechanism 20 is arranged upward relative to the left front wheel 3L and the right front wheel 3R. The link mechanism 20 includes an upper arm 21, a lower arm 22, a left arm 23 and a right arm 24.

The upper arm 21 and the lower arm 22 extend leftward and rightward. The upper arm 21 and the lower arm 22 are examples of link members extending leftward and rightward of the vehicle body frame 10. The lower arm 22 is arranged downward of the upper arm 21. The upper arm 21 and the lower arm 22 are arranged forward of the head pipe 11 (see FIG. 2). The upper arm 21 is rotatably linked to the head pipe 11 by a first central link shaft 21Cc extending in the vehicle front-rear direction. The lower arm 22 is rotatably linked to the head pipe 11 by a second central link shaft 22Cc extending in the vehicle front-rear direction.

In the present embodiment, as shown in FIG. 2, another lower arm 22B is arranged rearward of the head pipe 11. The lower arm 22B extends leftward and rightward. The lower arm 22B is arranged downward of the upper arm 21. The lower arm 22B is rotatably linked to the head pipe 11 by a third central link shaft 23Cc (see FIG. 3) extending in the vehicle front-rear direction. Note that another upper arm (not shown) may be arranged rearward of the head pipe 11, and this upper arm may be rotatably linked to the head pipe 11 by another central link shaft (not shown) extending in the vehicle front-rear direction. Note however that the other upper arm and the other lower arm 22B arranged rearward of the head pipe 11 are optional.

As shown in FIG. 4, the left arm 23 and the right arm 24 extend upward and downward. The left arm 23 is arranged leftward of the head pipe 11 and the right arm 24 is arranged rightward of the head pipe 11. The right arm 24 is arranged rightward of the left arm 23. The left arm 23 and the right arm 24 are arranged rearward of the upper arm 21 and the lower arm 22. The left arm 23 and the right arm 24 are arranged forward of the lower arm 22B. The left arm 23 and the right arm 24 are rotatably linked to the upper arm 21, the lower arm 22 and the lower arm 22B.

Specifically, the upper end portion of the left arm 23 is rotatably linked to the left end portion of the upper arm 21 by a first left link shaft 21Lc extending in the vehicle front-rear direction. The lower end portion of the left arm 23 is rotatably linked to the left end portion of the lower arm 22 by a second left link shaft 22Lc extending in the vehicle front-rear direction. The lower end of the left arm 23 is rotatably linked to the left end portion of the lower arm 22B by a third left link shaft (not shown) extending in the vehicle front-rear direction. The upper end portion of the right arm 24 is rotatably linked to the right end portion of the upper arm 21 by the first right link shaft 21Rc extending in the vehicle front-rear direction. The lower end portion of the right arm 24 is rotatably linked to the right end portion of the lower arm 22 by the second right link shaft 22Rc extending in the vehicle front-rear direction. The lower end portion of the right arm 24 is rotatably linked to the right end portion of the lower arm 22B by a third right link shaft (not shown) extending in the vehicle front-rear direction.

The leaning vehicle 1 includes, as front suspensions, a left suspension 25L and a right suspension 25R. In the present embodiment, the left suspension 25L and the right suspension 25R are telescopic suspensions. The upper end portion of the left suspension 25L and the upper end portion of the right suspension 25R are connected to the link mechanism 20. The lower end portion of the left suspension 25L is connected to the left front wheel 3L, and the lower end portion of the right suspension 25R is connected to the right front wheel 3R. Specifically, the upper end portion of the left suspension 25L is connected to the lower end portion of the left arm 23 via a left bracket 26L. The upper end portion of the left suspension 25L is connected to the left arm 23 so as to be rotatable in the left-right direction of the vehicle body frame 10. The upper end portion of the right suspension 25R is connected to the lower end portion of the right arm 24 via a right bracket 26R. The upper end portion of the right suspension 25R is connected to the right arm 24 so as to be rotatable in the left-right direction of the vehicle body frame 10.

The left suspension 25L, the left bracket 26L and the left arm 23 together form a left wheel support member 19L that supports the left front wheel 3L. The right suspension 25R, the right bracket 26R and the right arm 24 together form a right wheel support member 19R that supports the right front wheel 3R.

A center plate 27C is fixed to the lower end portion of the steering shaft 14. As shown in FIG. 5, the center plate 27C extends forward from the steering shaft 14. A left plate 27L is fixed to the left bracket 26L. A right plate 27R is fixed to the right bracket 26R. The left plate 27L, the center plate 27C and the right plate 27R are linked to a tie rod 28 so as to be rotatable left and right. The steering shaft 14 is linked to the left arm 23 and the right arm 24 via the center plate 27C, the tie rods 28, the left plate 27L and the right plate 27R.

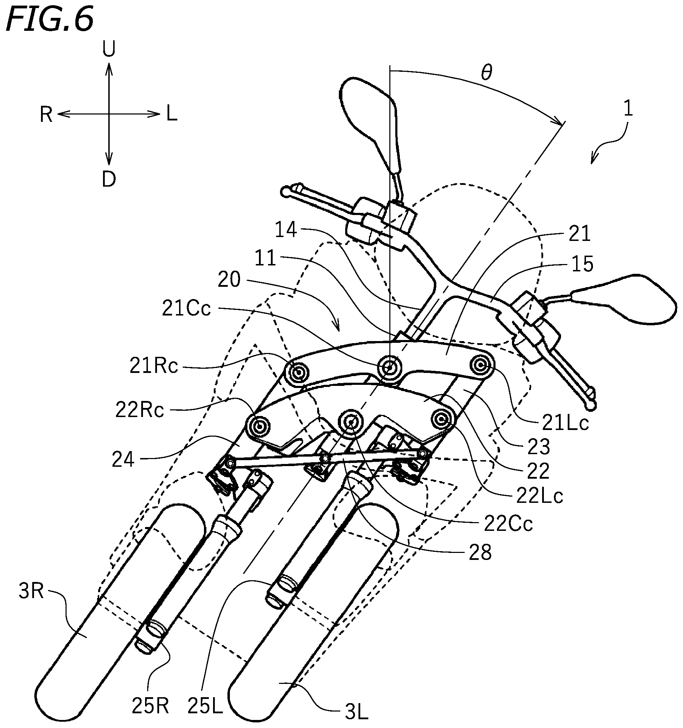

As shown in FIG. 3, the leaning vehicle 1 includes a roll angle control device 30 that controls the roll angle. Note that in the figures other than FIG. 3, the roll angle control device 30 is not shown. The roll angle as used herein is the tilt angle θ (see FIG. 6) of the vehicle body frame 10 from the vertical line. Note that in the present embodiment, the roll angle θ is equal to the angle between the axis of the head pipe 11 and the vertical line as viewed in the vehicle front view. The roll angle control device 30 controls the roll angle of the vehicle body frame 10 by adjusting the rotation of the upper arm 21 and the lower arm 22 relative to the vehicle body frame 10. The roll angle control device 30 is configured to apply a torque to at least one of the upper arm 21 and the lower arm 22. The roll angle control device 30 is connected to at least one of the upper arm 21 and lower arm 22, and to the vehicle body frame 10. In the present embodiment, the roll angle control device 30 is connected to the upper arm 21 and the head pipe 11. Note however that there is no particular limitation thereto, and the roll angle control device 30 may be connected to the lower arm 22 and the head pipe 11.

The roll angle control device 30 includes a case 31, a lean actuator 33, a gear 35A and a gear 35B arranged inside the case 31, and an actuator control device 36 arranged inside the case 31. The case 31 is supported by a support member 32 fixed to the head pipe 11.

The lean actuator 33 is a power source that applies a torque around the first central link shaft 21Cc to the vehicle body frame 10. The lean actuator 33 may apply a torque directly or indirectly to the vehicle body frame 10. In the present embodiment, the lean actuator 33 applies a leftward or rightward torque to the upper arm 21, thereby indirectly applying a rightward or leftward torque to the vehicle body frame 10. In the present embodiment, the lean actuator 33 is an electric motor. Note however that the lean actuator 33 is not limited to an electric motor as long as the lean actuator 33 can generate power.

The lean actuator 33 is connected to the gear 35A, and the gear 35A is meshed with the gear 35B. The gear 35A and the gear 35B together form a decelerator. The gear 35B is fixed to an output shaft 34. The output shaft 34 is a rotating shaft driven by the lean actuator 33 and is connected to the upper arm 21. The torque of the lean actuator 33 is transmitted to the upper arm 21 via the gear 35A, the gear 35B and the output shaft 34. When the lean actuator 33 is driven, a torque around the first central link shaft 21Cc (see FIG. 4) is applied to the upper arm 21. Since the upper arm 21 is linked to the vehicle body frame 10 so as to be rotatable around the first central link shaft 21Cc, when a torque around the first central link shaft 21Cc is applied to the upper arm 21, a torque around the first central link shaft 21Cc is generated in the vehicle body frame 10.

The leaning vehicle 1 includes an IMU (Inertial Measurement Unit) (not shown). The actuator control device 36 is communicatively connected to the IMU via a wire harness (not shown). The actuator control device 36 is configured to receive a signal from the IMU and control the lean actuator 33.

As shown in FIG. 2, a power unit 2 is pivotally supported on the vehicle body frame 10. The power unit 2 is connected to the rear wheel 4 so that power can be transmitted therebetween. The power unit 2 generates driving force for traveling. The power unit 2 provides power to the rear wheel 4. The power unit 2 may include an internal combustion engine or may include an electric motor. In the present embodiment, the power unit 2 includes an internal combustion engine (hereinafter referred to as an "engine").

The leaning vehicle 1 includes left and right rear suspensions 50. The left rear suspension 50 is arranged leftward of the rear wheel 4 and the right rear suspension 50 is arranged rightward of the rear wheel 4. Each rear suspension 50 includes an upper support portion 51 pivotably supported on the vehicle body frame 10 and a lower support portion 52 pivotably supported on the rear wheel 4. Herein, the upper support portion 51 is pivotably supported on the seat frame 13 via a bracket 13B. The lower support portion 52 is pivotably supported on a bracket 4B mounted on the axle of the rear wheel 4.

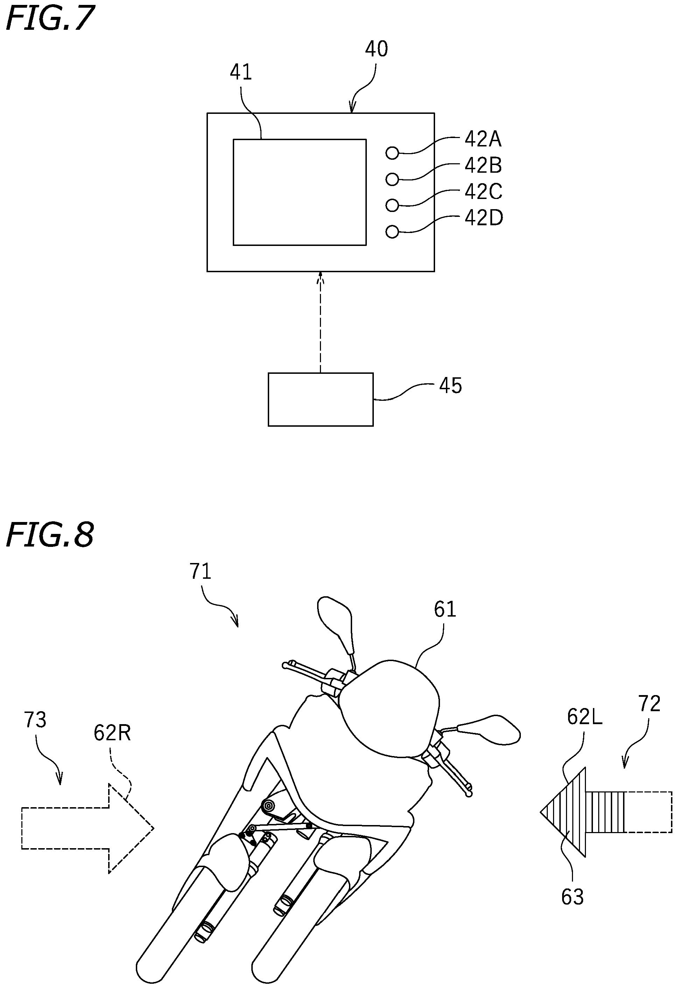

The leaning vehicle 1 includes a control panel 40 (see FIG. 4). The control panel 40 is arranged upward of the head pipe 11. The control panel 40 is arranged rearward of a central portion 15C of the steering handle 15. Note however that there is no particular limitation on the position of the control panel 40 as long as the control panel 40 is in a position where it is visible and operable by the rider seated on the seat 5. As shown in FIG. 7, the control panel 40 according to the present embodiment includes a display device 41 and switches 42A to 42D. The control panel 40 also includes a display control device 45 that controls the display device 41.

The display device 41 can display the speed of the leaning vehicle 1, the engine speed and the amount of fuel, etc.. The display device 41 is capable of displaying an image showing the status of operation of the lean actuator 33. There is no particular limitation on the form of the display device 41. The display device 41 may, for example, include a liquid crystal display or an organic EL display. The display device 41 may include LEDs.

With the leaning vehicle 1 according to the present embodiment, with the provision of the actuator control device 36 that controls the lean actuator 33, it is possible to control the roll angle when the leaning vehicle 1 is traveling and when the leaning vehicle 1 is stopped. There is no particular limitation on the control performed by the actuator control device 36. The actuator control device 36 can perform the standing assist control as follows.

The standing assist control is a control of keeping the vehicle body frame 10 standing upright when the leaning vehicle 1 is starting, traveling slowly, or stopped at a stoplight, etc. For example, when the leaning vehicle 1 is traveling slowly, if the rider puts their weight to the left, the vehicle body frame 10 is subjected to a leftward force. As it is, the vehicle body frame 10 will lean leftward. The actuator control device 36 detects the tilt of the vehicle body frame 10 based on the signal from the IMU. When the actuator control device 36 detects the tilt of the vehicle body frame 10, the actuator control device 36 controls the lean actuator 33 to eliminate the tilt. Specifically, the actuator control device 36 controls the lean actuator 33 so that the roll angle of the vehicle body frame 10 becomes zero. When the vehicle body frame 10 leans leftward, the actuator control device 36 controls the lean actuator 33 so as to apply a rightward torque to the vehicle body frame 10. When the vehicle body frame 10 leans rightward, the actuator control device 36 controls the lean actuator 33 so as to apply a leftward torque to the vehicle body frame 10.

The display control device 45 is configured to display an image showing the status of operation of the lean actuator 33 (hereinafter referred to as an actuator operation image) on the display device 41. In the present embodiment, as the actuator operation image, the display control device 45 simultaneously displays information on whether the lean actuator 33 is outputting a torque, the direction of the torque output by the lean actuator 33, the magnitude of the torque output by the lean actuator 33, and the degree of tilt of the vehicle body frame 10 from the vertical line on the display device 41.

FIG. 8 is a diagram of an example of the actuator operation image displayed on the display device 41. The image includes a display area 71 in which an image of a vehicle 61 is displayed, a display area 72 in which a leftward arrow 62L is displayed, and a display area 73 in which a rightward arrow 62R is displayed.

When the vehicle body frame 10 is tilted from the vertical line, the display area 71 displays the vehicle 61 tilted from the vertical line. Note that since the display device 41 is viewed by the rider seated on the seat 5, the image of the vehicle 61 displayed on the display device 41 is a mirror image of the leaning vehicle 1 with left and right reversed. When the vehicle body frame 10 of the leaning vehicle 1 is tilted leftward, the vehicle 61 is displayed tilted leftward, and when the vehicle body frame 10 is tilted rightward, the vehicle 61 is displayed tilted rightward. Here, the greater the degree of tilt of the vehicle body frame 10 from the vertical line (in other words, the greater the roll angle), the greater the degree of tilt of the vehicle 61 from the vertical line. Thus, the direction and degree of tilt of the vehicle body frame 10 from the vertical line is displayed in the display area 71.

When the vehicle body frame 10 is tilted rightward, the lean actuator 33 outputs a leftward torque. As shown in FIG. 8, when the lean actuator 33 is outputting a leftward torque, part or whole of the leftward arrow 62L is displayed in solid black 63 and the entire rightward arrow 62R is displayed in solid white. When the lean actuator 33 is outputting a rightward torque, part or all of the rightward arrow 62R is displayed in solid black 63 and the entire leftward arrow 62L is displayed in solid white. When the lean actuator 33 is not outputting a torque, the entire leftward arrow 62L and the entire rightward arrow 62R are displayed in solid white. Therefore, based on the presence or absence of solid black 63 in the leftward arrow 62L and the rightward arrow 62R, it is possible to know information on whether the lean actuator 33 is outputting a torque and the direction of the torque output by the lean actuator 33. Thus, the information of whether the lean actuator 33 is outputting a torque and the direction of the torque output by the lean actuator 33 are displayed in the display areas 72 and 73.

Here, in the leftward arrow 62L and the rightward arrow 62R, the greater the torque output by the lean actuator 33, the greater the area of solid black 63. Based on the area of solid black 63, it is possible to know the magnitude of the torque output by the lean actuator 33. Thus, the magnitude of the torque output by the lean actuator 33 is displayed in the display areas 72 and 73.

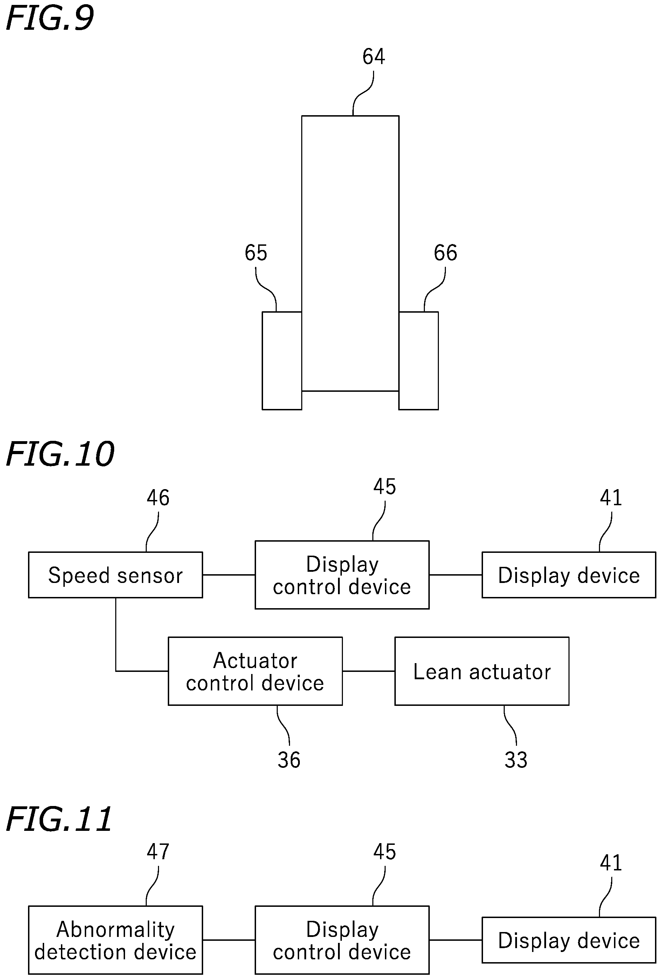

FIG. 9 is a diagram showing another example of an actuator operation image. This image shows a center block 64, a left block 65 and a right block 66. In this image, the left block 65 is displayed in solid black when the lean actuator 33 is outputting a leftward torque, and the right block 66 is displayed in solid black when the lean actuator 33 is outputting a rightward torque. When the lean actuator 33 is not outputting a torque, the left block 65 and the right block 66 are displayed in solid white. This image displays information on whether the lean actuator 33 is outputting a torque and the direction of the torque output by the lean actuator 33.

Note that the actuator operation images described above are only an example. Needless to say, the actuator operation image is not limited to the image examples.

Now, when the actuator control device 36 is not performing the standing assist control, the rider does not need to know the status of operation of the lean actuator 33. Therefore, when the rider turns ON/OFF the standing assist control, the display image on the display device 41 may be switched automatically. For example, in an example not covered by the claims, assume that the switch 42A (see FIG. 7) is the switch for switching ON/OFF the standing assist control. When the rider turns ON the switch 42A, the standing assist control by the actuator control device 36 is initiated, and when the rider turns OFF the switch 42A, the standing assist control by the actuator control device 36 is terminated. The display control device 45 may display the actuator operation image on the display device 41 when the switch 42A is ON and may display another image different from the actuator operation image on the display device 41 when the switch 42A is OFF. For example, the display control device 45 may display the speed of the leaning vehicle 1, the engine speed and the amount of fuel, etc., on the display device 41 when the switch 42A is OFF.

While the standing assist control may be turned ON/OFF manually in an example not covered by the claims, it is turned ON/OFF automatically depending on the speed of the leaning vehicle 1 according to the invention. Where the standing assist control is switched ON/OFF automatically, the displayed image on the display device 41 may be switched automatically accordingly. As shown in FIG. 10, the leaning vehicle 1 includes a speed sensor 46 to detect the speed of the leaning vehicle 1. In one other embodiment, the actuator control device 36 is configured to execute the standing assist control when the speed detected by the speed sensor 46 is less than or equal to a threshold value, and to cancel the standing assist control when the speed becomes greater than the threshold value. Note that the speed being less than or equal to the threshold value includes the case where the speed is zero. The actuator control device 36 executes the standing assist control when the leaning vehicle 1 is traveling slowly and when it is stopped. The display control device 45 causes the actuator operation image to be displayed on the display device 41 when the speed detected by the speed sensor 46 is less than or equal to the threshold value, and causes another image different from the actuator operation image to be displayed on the display device 41 when the speed is greater than the threshold value. As a result, when the standing assist control is started, the displayed image on the display device 41 is automatically switched to the actuator operation image, and when the standing assist control is finished, the displayed image on the display device 41 is automatically switched to another image.

As shown in FIG. 11, the leaning vehicle 1 according to the present embodiment includes an abnormality detection device 47 for detecting an abnormality of the lean actuator 33. The display control device 45 is configured to, when the abnormality detection device 47 detects an abnormality of the lean actuator 33, display on the display device 41 that the abnormality has occurred. The display control device 45 may display an image indicating the occurrence of an abnormality of the lean actuator 33 on the display device 41 together with the actuator operation image, or may display an image indicating the occurrence of an abnormality of the lean actuator 33 on the display device 41 instead of the actuator operation image.

As described above, the leaning vehicle 1 according to the present embodiment, an image indicating the status of operation of the lean actuator 33 is displayed on the display device 41. By looking at the display device 41, the rider can know the status of operation of the lean actuator 33. The rider can intuitively understand the status of the standing assist control. Thus, it is easier for the rider to perform an operation in conformity with the operation of the lean actuator 33. The rider can drive the leaning vehicle 1 desirably while the lean actuator 33 is operating.

According to the present embodiment, information on whether the lean actuator 33 is outputting a torque is displayed on the display device 41. By looking at the display device 41, the rider can easily know whether the lean actuator 33 is outputting a torque. For example, before the leaning vehicle 1 decelerates to a stop, the rider can know that standing assist is being provided. The rider can stop the leaning vehicle 1 with confidence.

According to the present embodiment, the direction of the torque output by the lean actuator 33 is displayed on the display device 41. By looking at the display device 41, the rider can easily know the direction of the torque output by the lean actuator 33. The rider can intuitively understand the operation of the lean actuator 33.

According to the present embodiment, the magnitude of the torque output by the lean actuator 33 is displayed on the display device 41. By looking at the display device 41, the rider can easily know the magnitude of the torque output by the lean actuator 33. For example, if the torque output by the lean actuator 33 is large, the rider can refrain from abrupt maneuvers (e.g., suddenly turning the acceleration grip for rapid acceleration) so as to stabilize the attitude of the leaning vehicle 1. The rider can drive the leaning vehicle 1 desirably.

According to the present embodiment, the degree of tilt of the vehicle body frame 10 from the vertical line is displayed on the display device 41. By looking at the display device 41, the rider can easily know the degree of tilt of the vehicle body frame 10. For example, if the degree of tilt of the vehicle body frame 10 is large, the rider can refrain from abrupt maneuvers so as to stabilize the attitude of the leaning vehicle 1. The rider can drive the leaning vehicle 1 desirably.

According to the present embodiment, information on whether the lean actuator 33 is outputting a torque, the direction of the torque output by the lean actuator 33, the magnitude of the torque output by the lean actuator 33, and the degree of tilt of the vehicle body frame 10 from the vertical line are displayed at the same time on the display device 41. Thus, the rider can more specifically understand the status of the standing assist control.

According to the present embodiment, when an abnormality occurs in the lean actuator 33, the abnormality detection device 47 detects the abnormality and indicates on the display device 41 that an abnormality has occurred in the lean actuator 33. The rider can immediately know an abnormality of the lean actuator 33. Therefore, the rider can take appropriate action, such as stopping driving the leaning vehicle 1.

As mentioned above, in an example not covered by the claims, the display control device 45 may display the actuator operation image on the display device 41 when the switch 42A for switching ON/OFF the standing assist control is ON, and display another image different from the actuator operation image on the display device 41 when the switch 42A is OFF. Thus, the rider can know the status of operation of the lean actuator 33 as needed. With a single display device 41, it is possible to selectively display both the actuator operation image and another image. The number of display devices can be reduced compared to where a dedicated display device for displaying the actuator operation image is provided.

As described above, the actuator control device 36 is configured to perform the standing assist control when the speed of the leaning vehicle 1 detected by the speed sensor 46 is less than or equal to a threshold value and to not perform the standing assist control when the speed of the leaning vehicle 1 is greater than the threshold value. The display control device 45 displays an actuator operation image on the display device 41 when the speed of the leaning vehicle 1 detected by the speed sensor 46 is less than or equal to the threshold value and displays another image on the display device 41 when the speed of the leaning vehicle 1 is greater than the threshold value. Thus, the rider can know the status of operation of the lean actuator 33 as needed. Since a single display device 41 can selectively display both the actuator operation image and another image, it is possible to reduce the number of display devices.

While an embodiment of the leaning vehicle has been described above, the embodiment is merely an example. Various other embodiments are possible.

As described above, actuator operation images shown in FIG. 8 and FIG. 9 are merely examples. Actuator operation images that the display control device 45 displays on the display device 41 may be other images. The display control device 45 may display, as the actuator operation image on the display device 41, only one of, or simultaneously two or three of, information on whether the lean actuator 33 is outputting a torque, the direction of the torque output by the lean actuator 33, the magnitude of the torque output by the lean actuator 33, and the degree of tilt of the vehicle body frame 10 from the vertical line. The display control device 45 may switch between a plurality of actuator operation images to be displayed on the display device 41.

In the actuator operation images shown in FIG. 8 and FIG. 9, instead of solid black, a solid color other than solid black may be used. Instead of using the solid black and solid white display for the arrows 62L and 62R in the actuator operation image of FIG. 8, the size of the arrows 62L and 62R may be varied depending on the magnitude of the torque output by the lean actuator 33. In the actuator operation image of FIG. 9, a blinking display may be used instead of the solid black display.

While the status of the operation of the lean actuator 33 is displayed by graphics in the actuator images of FIG. 8 and FIG. 9, letters, numbers or symbols may be displayed in addition to, or instead of, the graphics. For example, the presence or absence of the torque of the lean actuator 33 and the direction of the torque output by the lean actuator 33 may be displayed in letters. The magnitude of the torque output by the lean actuator 33 or the degree of tilt of the vehicle body frame 10 may be displayed in numbers.

The leaning vehicle 1 in the embodiment described above is a scooter. However, the form of vehicle of the leaning vehicle is not limited to a scooter.

### Reference Signs List

1: Leaning vehicle, 3L: Left front wheel (left wheel), 3R: Right front wheel (right wheel), 5: Seat, 7: Footrest, 10: Vehicle body frame, 11: Head pipe, 14: Steering shaft, 15: Steering handle, 19L: Left wheel support member, 19R: Right wheel support member, 21: Upper arm (link member), 21Cc: First central link shaft (central link shaft), 21Lc: First left link shaft (left link shaft), 21Rc: First right link shaft (right link shaft), 33: Lean actuator, 36: Actuator control device, 41: Display device, 42A: Switch, 45: Display control device, 46: Speed sensor, 47: Abnormality detection device

## Claims

1. A leaning vehicle (1) comprising:
a vehicle body frame (10) including a head pipe (11);
a left wheel (3L) arranged leftward relative to the head pipe (11);
a right wheel (3R) arranged rightward relative to the head pipe (11);
a left wheel support member (19L) supporting the left wheel (3L);
a right wheel support member (19R) arranged rightward of the left wheel support member (19L) and supporting the right wheel (3R);
a link member (21) extending leftward and rightward of the vehicle body frame (10);
a central link shaft (21Cc) extending in a vehicle front-rear direction that rotatably links the vehicle body frame (10) to the link member (21);
a left link shaft (21Lc) extending in the vehicle front-rear direction that rotatably links the left wheel support member (19L) to the link member (21);
a right link shaft (21Rc) extending in the vehicle front-rear direction that rotatably links the right wheel support member (19R) to the link member (21);
a lean actuator (33) that is configured to apply a leftward or rightward torque around the central link shaft (21Cc) to the vehicle body frame (10);
a display device (41);
a display control device (45) that is configured to display an image indicating a status of operation of the lean actuator (33) on the display device (41); and
a speed sensor (46) that is configured to detect a speed of the leaning vehicle (1), **characterized by** the leaning vehicle (1) comprising:
an actuator control device (36) that is configured to execute a standing assist control of controlling the lean actuator (33) to keep the vehicle body frame (10) standing by itself when the speed detected by the speed sensor (46) is less than or equal to a threshold value,
wherein the display control device (45) is configured to display the image indicating the status of operation of the lean actuator (33) on the display device (41) when the speed detected by the speed sensor (46) is less than or equal to the threshold value, and display another image different from said image on the display device (41) when the speed is greater than the threshold value.

2. The leaning vehicle (1) according to claim 1, wherein the display control device (45)
is configured to display information on whether the lean actuator (33) is outputting a torque on the display device (41).

3. The leaning vehicle (1) according to claim 1 or 2, wherein the display control device (45) is configured to display a direction of the torque output by the lean actuator (33) on the display device (41).

4. The leaning vehicle (1) according to any one of claims 1 to 3, wherein the display control device (45) is configured to display a magnitude of the torque output by the lean actuator (33) on the display device (41).

5. The leaning vehicle (1) according to any one of claims 1 to 4, wherein the display control device (45) is configured to display a degree of tilt of the vehicle body frame (10) from a vertical line on the display device (41).

6. The leaning vehicle (1) according to any one of claims 1 to 5, wherein the display control device (45) is configured to simultaneously display, on the display device (41), two or more of information on whether the lean actuator (33) is outputting a torque, a direction of the torque output by the lean actuator (33), a magnitude of the torque output by the lean actuator (33), and a degree of tilt of the vehicle body frame (10) from a vertical line.

7. The leaning vehicle (1) according to any one of claims 1 to 6, comprising:
an abnormality detection device (47) that is configured to detect an abnormality of the lean actuator (33),
wherein the display control device (45) is configured to, when the abnormality detection device (47) detects an abnormality of the lean actuator (33), indicate on the display device (41) that the abnormality has occurred.

8. The leaning vehicle (1) according to any one of claims 1 to 7, comprising:
a steering shaft (14) supported by the head pipe (11); and
a steering handle (15) fixed to the steering shaft (14),
wherein the left wheel (3L) and the right wheel (3R) are a left front wheel and a right front wheel, respectively, arranged forward relative to the steering handle (15).

9. The leaning vehicle (1) according to any one of claims 1 to 8, comprising:
a seat (5) supported by the vehicle body frame (10); and
a footrest (7) supported by the vehicle body frame (10), arranged downward of the seat (5) and supporting the feet of a rider seated on the seat (5).

## Patentansprüche

1. Ein Neigefahrzeug (1), umfassend:
einen Fahrzeugkörperrahmen (10), der ein Kopfrohr (11) enthält;
ein linkes Rad (3L), das relativ zum Kopfrohr (11) links angeordnet ist;
ein rechtes Rad (3R), das relativ zum Kopfrohr (11) rechts angeordnet ist;
ein Stützelement des linken Rads (19L), das das linke Rad (3L) stützt;
ein Stützelement des rechten Rads (19R), das rechts vom Stützelement des linken Rads (19L) angeordnet ist und das rechte Rad (3R) stützt;
ein Verbindungselement (21), das sich nach links und rechts vom Fahrzeugkörperrahmen (10) erstreckt;
eine zentrale Verbindungswelle (21Cc), die sich in einer Fahrzeug-vorne-hinten-Richtung erstreckt und den Fahrzeugkörperrahmen (10) drehbar mit dem Verbindungselement (21) verbindet;
eine linke Verbindungswelle (21Lc), die sich in der Fahrzeug-vorne-hinten-Richtung erstreckt und das Stützelement des linken Rads (19L) drehbar mit dem Verbindungselement (21) verbindet;
eine rechte Verbindungswelle (21Rc), die sich in der Fahrzeug-vorne-hinten-Richtung erstreckt und das Stützelement des rechten Rads (19R) drehbar mit dem Verbindungselement (21) verbindet;
einen Neigungsaktuator (33), der dazu konfiguriert ist, um ein nach links oder rechts gerichtetes Drehmoment um die zentrale Verbindungswelle (21Cc) herum auf den Fahrzeugkörperrahmen (10) auszuüben;
eine Anzeigevorrichtung (41);
eine Anzeigesteuervorrichtung (45), die dazu konfiguriert ist, auf der Anzeigevorrichtung (41) ein Bild anzuzeigen, das einen Betriebsstatus des Neigungsaktuators (33) anzeigt; und
einen Geschwindigkeitssensor (46), der so konfiguriert ist, eine Geschwindigkeit des Neigefahrzeugs (1) zu detektieren,
**gekennzeichnet dadurch, dass** das Neigefahrzeug (1) umfasst:
eine Aktuatorsteuervorrichtung (36), die dazu konfiguriert ist, eine Stehhilfesteuerung zum Steuern des Neigungsaktuators (33) auszuführen, um den Fahrzeugkörperrahmen (10) von selbst stehend zu halten, wenn die vom Geschwindigkeitssensor (46) detektierte Geschwindigkeit weniger als oder gleich einem Schwellwert ist,
wobei die Anzeigesteuervorrichtung (45) dazu konfiguriert ist, das Bild, das den Betriebsstatus des Neigungsaktuators (33) anzeigt, auf der Anzeigevorrichtung (41) anzuzeigen, wenn die vom Geschwindigkeitssensor (46) detektierte Geschwindigkeit weniger als oder gleich dem Schwellwert ist, und ein anderes Bild, das sich von diesem Bild unterscheidet, auf der Anzeigevorrichtung (41) anzuzeigen, wenn die Geschwindigkeit größer als der Schwellwert ist.

2. Das Neigefahrzeug (1) gemäß Anspruch 1, wobei die Anzeigesteuervorrichtung (45) dazu konfiguriert ist, Informationen darüber, ob der Neigungsaktuator (33) ein Drehmoment ausgibt, auf der Anzeigevorrichtung (41) anzuzeigen.

3. Das Neigefahrzeug (1) gemäß Anspruch 1 oder 2, wobei die Anzeigesteuervorrichtung (45) dazu konfiguriert ist, eine Richtung des von dem Neigungsaktuator (33) ausgegebenen Drehmoments auf der Anzeigevorrichtung (41) anzuzeigen.

4. Das Neigefahrzeug (1) gemäß irgendeinem der Ansprüche 1 bis 3, wobei die Anzeigesteuervorrichtung (45) dazu konfiguriert ist, eine Größe des von dem Neigungsaktuator (33) ausgegebenen Drehmoments auf der Anzeigevorrichtung (41) anzuzeigen.

5. Das Neigefahrzeug (1) gemäß irgendeinem der Ansprüche 1 bis 4, wobei die Anzeigesteuervorrichtung (45) dazu konfiguriert ist, einen Neigungsgrad des Fahrzeugkörperrahmens (10) von einer vertikalen Linie auf der Anzeigevorrichtung (41) anzuzeigen.

6. Das Neigefahrzeug (1) gemäß irgendeinem der Ansprüche 1 bis 5, wobei die Anzeigesteuervorrichtung (45) dazu konfiguriert ist, auf der Anzeigevorrichtung (41) gleichzeitig zwei oder mehr Informationen darüber anzuzeigen, ob der Neigungsaktuator (33) ein Drehmoment ausgibt, über eine Richtung des vom Neigungsaktuator (33) ausgegebenen Drehmoments, eine Größe des vom Neigungsaktuator (33) ausgegebenen Drehmoments und einen Neigungsgrad des Fahrzeugkörperrahmens (10) von einer vertikalen Linie.

7. Das Neigefahrzeug (1) gemäß irgendeinem der Ansprüche 1 bis 6, umfassend:
eine Abnormalitätsdetektionsvorrichtung (47), die dazu konfiguriert ist, eine Abnormalität des Neigungsaktuators (33) zu detektieren,
wobei die Anzeigesteuervorrichtung (45) dazu konfiguriert ist, auf der Anzeigevorrichtung (41) anzuzeigen, dass die Abnormalität aufgetreten ist, wenn die Abnormalitätsdetektionsvorrichtung (47) eine Abnormalität des Neigungsaktuators (33) detektiert.

8. Das Neigefahrzeug (1) gemäß irgendeinem der Ansprüche 1 bis 7, umfassend:
eine Lenkwelle (14), die durch das Kopfrohr (11) gestützt wird; und
einen an der Lenkwelle (14) befestigten Lenkgriff (15),
wobei das linke Rad (3L) und das rechte Rad (3R) jeweils ein linkes Vorderrad und ein rechtes Vorderrad sind, die relativ zum Lenkgriff (15) vorn angeordnet sind.

9. Das Neigefahrzeug (1) gemäß irgendeinem der Ansprüche 1 bis 8, umfassend:
einen Sitz (5), der vom Fahrzeugkörperrahmen (10) gestützt wird; und
eine Fußstütze (7), die vom Fahrzeugkörperrahmen (10) gestützt wird, unterhalb des Sitzes (5) angeordnet ist und die Füße eines auf dem Sitz (5) sitzenden Fahrers stützt.

## Revendications

1. Véhicule inclinable (1), comprenant :
un châssis de carrosserie de véhicule (10) comprenant un tube de tête (11) ;
une roue gauche (3L) agencée à gauche par rapport au tube de tête (11) ;
une roue droite (3R) agencée à droite par rapport au tube de tête (11) ;
un élément de support de roue gauche (19L) supportant la roue gauche (3L) ;
un élément de support de roue droite (19R) agencé à droite de l'élément de support de roue gauche (19L) et supportant la roue droite (3R) ;
un élément de liaison (21) s'étendant à gauche et à droite du châssis de carrosserie de véhicule (10) ;
un arbre de liaison central (21Cc) s'étendant selon une direction avant-arrière du véhicule qui relie en rotation le châssis de carrosserie de véhicule (10) à l'élément de liaison (21) ;
un arbre de liaison gauche (21Lc) s'étendant selon la direction avant-arrière du véhicule qui relie en rotation l'élément de support de roue gauche (19L) à l'élément de liaison (21) ;
un arbre de liaison droit (21Rc) s'étendant selon la direction avant-arrière du véhicule qui relie en rotation l'élément de support de roue droite (19R) à l'élément de liaison (21) ;
un actionneur d'inclinaison (33) qui est configuré pour appliquer un couple vers la gauche ou vers la droite autour de l'arbre de liaison central (21Cc) au châssis de carrosserie de véhicule (10) ;
un dispositif d'affichage (41) ;
un dispositif de commande d'affichage (45) qui est configuré pour afficher, sur le dispositif d'affichage (41), une image indiquant l'état de fonctionnement de l'actionneur d'inclinaison (33) ; et
un capteur de vitesse (46) qui est configuré pour détecter la vitesse du véhicule inclinable (1),
**caractérisé en ce que** le véhicule inclinable (1) comprend :
un dispositif de commande d'actionneur (36) qui est configuré pour exécuter une commande d'assistance à la position verticale consistant à commander l'actionneur d'inclinaison (33) pour maintenir le châssis de carrosserie de véhicule (10) en position verticale de manière autonome lorsque la vitesse détectée par le capteur de vitesse (46) est inférieure ou égale à une valeur seuil,
dans lequel le dispositif de commande d'affichage (45) est configuré pour afficher l'image indiquant l'état de fonctionnement de l'actionneur d'inclinaison (33) sur le dispositif d'affichage (41) lorsque la vitesse détectée par le capteur de vitesse (46) est inférieure ou égale à la valeur seuil, et afficher une autre image, différente de ladite image, sur le dispositif d'affichage (41) lorsque la vitesse est supérieure à la valeur seuil.

2. Véhicule inclinable (1) selon la revendication 1, dans lequel le dispositif de commande d'affichage (45) est configuré pour afficher, sur le dispositif d'affichage (41), des informations indiquant si l'actionneur d'inclinaison (33) délivre en sortie un couple.

3. Véhicule inclinable (1) selon la revendication 1 ou 2, dans lequel le dispositif de commande d'affichage (45) est configuré pour afficher, sur le dispositif d'affichage (41), une direction du couple délivré en sortie par l'actionneur d'inclinaison (33).

4. Véhicule inclinable (1) selon l'une quelconque des revendications 1 à 3, dans lequel le dispositif de commande d'affichage (45) est configuré pour afficher, sur le dispositif d'affichage (41), une intensité du couple délivré en sortie par l'actionneur d'inclinaison (33).

5. Véhicule inclinable (1) selon l'une quelconque des revendications 1 à 4, dans lequel le dispositif de commande d'affichage (45) est configuré pour afficher, sur le dispositif d'affichage (41), un degré d'inclinaison du châssis de carrosserie de véhicule (10) par rapport à une ligne verticale.

6. Véhicule inclinable (1) selon l'une quelconque des revendications 1 à 5, dans lequel le dispositif de commande d'affichage (45) est configuré pour afficher simultanément, sur le dispositif d'affichage (41), deux informations ou plus indiquant si l'actionneur d'inclinaison (33) délivre en sortie un couple, la direction du couple délivré en sortie par l'actionneur d'inclinaison (33), l'intensité du couple délivré en sortie par l'actionneur d'inclinaison (33), et le degré d'inclinaison du châssis de carrosserie de véhicule (10) par rapport à une ligne verticale.

7. Véhicule inclinable (1) selon l'une quelconque des revendications 1 à 6, comprenant :
un dispositif de détection d'anomalie (47) qui est configuré pour détecter une anomalie de l'actionneur d'inclinaison (33),
dans lequel le dispositif de commande d'affichage (45) est configuré, lorsque le dispositif de détection d'anomalie (47) détecte une anomalie de l'actionneur d'inclinaison (33), pour indiquer, sur le dispositif d'affichage (41), que l'anomalie s'est produite.

8. Véhicule inclinable (1) selon l'une quelconque des revendications 1 à 7, comprenant :
un arbre de direction (14) supporté par le tube de tête (11) ; et
un guidon (15) fixé à l'arbre de direction (14),
dans lequel la roue gauche (3L) et la roue droite (3R) sont respectivement une roue avant gauche et une roue avant droite, agencées en avant par rapport au guidon (15).

9. Véhicule inclinable (1) selon l'une quelconque des revendications 1 à 8, comprenant :
un siège (5) supporté par le châssis de carrosserie de véhicule (10) ; et
un repose-pieds (7) supporté par le châssis de carrosserie de véhicule (10), agencé sous le siège (5) et supportant les pieds d'un conducteur assis sur le siège (5).
